# EUROPÄISCHE PATENTSCHRIFT

(11) **EP 4 075 080 B1**
(45) Veröffentlichungstag und Bekanntmachung des Hinweises auf die Patenterteilung: **30.08.2023**
(21) Anmeldenummer: 22167535.8
(22) Anmeldetag: 11.04.2022
(51) Int. Cl.: F25B 41/20, F25B 41/26, F16K 11/00, F16K 11/074

(54) **VENTIL ZUR STEUERUNG EINES KÄLTEMITTELKREISLAUFES**
VALVE FOR CONTROLLING A COOLANT CIRCUIT
SOUPAPE DE COMMANDE D'UN CIRCUIT D'AGENT RÉFRIGÉRANT

(30) Priorität: 16.04.2021 DE 102021109701
(43) Veröffentlichungstag der Anmeldung: 19.10.2022
(73) Patentinhaber: Otto Egelhof GmbH & Co. KG, 70736 Fellbach (DE)
(72) Erfinder: Robin, Jean-Jacques, 73663 Berglen (DE); Ehmen, Andreas, 26389 Wilhelmshaven (DE); Willers, Dr. Eike, 70469 Stuttgart (DE); von Rad, Volker, 73732 Esslingen (DE); Bohnenstengel, Peter, 73730 Esslingen (DE)
(74) Vertreter: Mammel und Maser Patentanwälte PartG mbB

(56) Entgegenhaltungen:
- DE-A1-102017 102 841
- DE-U1- 29 903 320
- US-A- 2 653 003
- US-A- 3 473 551

## Beschreibung

Die Erfindung betrifft ein Ventil zur Steuerung eines Kältemittelkreislaufes einer Kälteanlage, vorzugsweise mit einer Wärmepumpenfunktion.

Aus der DE 10 2017 102 841 A1 ist ein Mehrwegventil zur Steuerung eines Kältemittelkreislaufes gemäß dem Oberbegriff von Anspruch 1 bekannt. Dieses Mehrwegventil umfasst ein Gehäuse, in welchem eine Ventilanordnung mit einer Drehschieberanordnung vorgesehen ist. Das Gehäuse umfasst eine erste und eine zweite Einlassöffnung, die mit einem Regulierraum verbunden ist. Eine erste und zweite Auslassöffnung im Gehäuse sind ebenfalls mit dem Regulierraum verbunden. Über eine Welle, die von einem Motor angetrieben ist, wird die Drehschieberanordnung angesteuert. Durch ein solches Mehrwegventil können mehrere Schaltpositionen zur Ansteuerung des Kältemittelkreislaufes und eine Serviceposition angesteuert werden.

Aus der US 3 473 551 A ist ein Drehventil bekannt. Durch einen drehbaren Bedienhebel werden verschiedene Schaltpositionen einer Steuerscheibe zu den Anschlüssen eingestellt, um einen Durchgang für ein Fluid anzusteuern.

Aus der US 2 653 003 A ist des Weiteren ein Drehventil bekannt. Dieses Drehventil weist eine Steuerscheibe mit mehreren Durchgangsöffnungen auf. Mittels einem Hebel kann die Steuerscheibe in verschiedene Schaltpositionen übergeführt werden.

Der Erfindung liegt die Aufgabe zugrunde, ein Ventil mit einer Drehschieberanordnung zur Steuerung eines Kältemittelkreislaufes vorzuschlagen, welche unabhängig von einer Strömungsrichtung eines Kältemittelstromes durch das Ventil eine abdichtende Ansteuerung von Schaltstellungen ermöglicht.

Diese Aufgabe wird durch ein Ventil zur Steuerung des Kältemittelkreislaufes gelöst, bei welchem eine Drehschieberanordnung der Ventilanordnung eine Steuerscheibe und zumindest eine Drehschieberauflage aufweist, wobei die Steuerscheibe drehbar zu der Drehschieberauflage ist, welche drehfest im Gehäuse vorgesehen und den zumindest zwei Auslässen im Gehäuse zugeordnet ist. Dabei ist die Drehschieberauflage schwimmend im Gehäuse gelagert. Diese schwimmende Anordnung der Drehschieberauflage weist den Vorteil auf, dass die Drehschieberauflage verspannungsfrei im Gehäuse angeordnet ist. Dadurch kann eine plane Anlage der zumindest einen Drehschieberauflage an der Steuerscheibe ermöglicht sein, wodurch eine dichte Anordnung zwischen der Steuerscheibe und der zumindest einen Drehschieberauflage unabhängig einer Durchströmungsrichtung des Kältemittels und/oder einer Schaltstellung erzielt wird.

Bevorzugt ist vorgesehen, dass die Drehschieberauflage in axialer Richtung zur Längsachse der zumindest einen Auslassöffnung im Gehäuse schwimmend gelagert ist. Diese Drehschieberauflage kann verspannungsfrei im Gehäuse zu der zumindest einen Auslassöffnung positioniert werden. Dadurch kann auf die Drehschieberauflage keine Spann- oder Haltekraft einwirken, die zu einer nicht planen Anlage an der Steuerscheibe und somit zur Undichtheit führen würde.

Die Drehschieberauflage ist gemäß der Erfindung von einem Aufnahmeadapter gehalten, der mit dem Gehäuse verbindbar ist. Somit kann zur drehfesten Fixierung der Drehschieberauflage zum Gehäuse eine Spann- oder Haltekraft durch den Aufnahmeadapter aufgenommen werden, wobei die Spann- oder Haltekraft nur zwischen dem Aufnahmeadapter und dem Gehäuse wirkt. Durch den Aufnahmeadapter kann die Drehschieberauflage verspannungsfrei und vorzugsweise zumindest in axialer Richtung zur Längsrichtung der zumindest einen Auslassöffnung schwimmend gelagert bzw. gehalten sein.

Des Weiteren ist bevorzugt vorgesehen, dass der Aufnahmeadapter zwischen einer Stirnfläche des Aufnahmeadapters und einer Abstützfläche der Drehschieberauflage, die der zur Steuerscheibe weisenden Dichtfläche gegenüberliegt, ein elastisch nachgiebiges Element vorgesehen ist. Dadurch kann die Drehschieberauflage mit einem zumindest geringen Abstand oder axialen Spalt zur Stirnfläche des Aufnahmeadapters gehalten werden. Dies ermöglicht, dass bei einer Drehbewegung der Steuerscheibe zur Ansteuerung eines Kältemittelstromes selbst geringe Winkelabweichungen um eine Längsachse der Ventilanordnung durch dieses elastisch nachgiebige Element ausgeglichen werden kann. Eine plane Anlage der Drehschieberauflage an der Steuerscheibe und somit abdichtende Ausbildung der Drehschieberanordnung kann aufrechterhalten bleiben.

Das elastisch nachgiebige Element zwischen der Drehschieberauflage und dem Aufnahmeadapter ist bevorzugt in einer Vertiefung in der Stirnfläche des Aufnahmeadapters vorgesehen. Alternativ kann das elastisch nachgiebige Element auch in einer Vertiefung der Drehschieberauflage bzw. der Abstützfläche der Drehschieberauflage vorgesehen sein. Dadurch kann eine konstruktiv einfache Ausgestaltung geschaffen werden. Vorzugsweise ist das elastisch nachgiebige Element lagefixiert in der Vertiefung vorgesehen. Diese Vertiefung ist kreisförmig ausgebildet und umgibt jeweils eine Auslassöffnung oder zumindest zwei Auslassöffnungen gleichzeitig. Bevorzugt kann die Vertiefung eine Schräge aufweisen, die in Richtung auf eine Durchlassöffnung in der Adapteraufnahme weist. Dadurch kann das elastisch nachgiebige Element radial nach außen fixiert gehalten werden, um eine sichere Positionierung des elastisch nachgiebigen Elements in der Vertiefung zu gewährleisten.

Der Aufnahmeadapter zur Aufnahme der Drehschieberauflage weist bevorzugt einen die Stirnfläche umgebenden und am Außenumfang der Stirnfläche vorgesehenen Halteabschnitt auf, der einen an einem Außenumfang der Drehschieberauflage vorgesehenen Befestigungsabschnitt umgreift. Dadurch ist zum einen ermöglicht, dass die Drehschieberauflage in radialer Richtung zum Aufnahmeadapter fixiert gehalten werden kann und zum anderen in axialer Richtung zur Stirnfläche des Aufnahmeadapters, die in radialer Richtung zur Längsachse der Auslassöffnung im Gehäuse ausgerichtet ist, mit Spiel positioniert werden kann.

Der Halteabschnitt des Aufnahmeadapters kann ausgehend von der Stirnfläche eine zylindrische Umfangsfläche aufweisen, durch welche der Befestigungsabschnitt der Drehschieberauflage zentrisch geführt ist und an einem stirnseitigen Ende der Umfangsfläche einen Greifrand umfassen, der den Befestigungsabschnitt umgreift oder hintergreift. Durch eine solche Ausgestaltung kann auch eine einfache Montage der Drehschieberauflage zum Aufnahmeadapter ermöglicht sein, insbesondere bei der Ausgestaltung des Greifabschnitts aus einem Material, welches beispielsweise umgebördelt, geprägt oder gepresst werden kann.

Vorteilhafterweise kann durch die Höhe der zylindrischen Umfangsfläche und/oder die Länge des Greifelementes des Halteabschnitts und/oder die Höhe des Befestigungsabschnitts an der Drehschieberauflage ein axiales Spiel zwischen der Abstützfläche der Drehschieberauflage und der Stirnfläche einstellbar sein. Vorteilhafterweise wird dieses axiale Spiel größer als 0,01 mm ausgebildet. Das elastisch nachgiebige Element kann somit die Abstützfläche der Drehschieberauflage zur Stirnfläche des Aufnahmeadapters auf Abstand halten.

Eine weitere bevorzugte Ausgestaltung des Aufnahmeadapters sieht vor, dass dieser zumindest eine Einsteckbuchse aufweist, welche in die zumindest eine Auslassöffnung im Gehäuse des Ventils einsteckbar ist. Dadurch kann eine einfache Montage und Lagefixierung des Aufnahmeadapters erfolgen.

Gemäß einer bevorzugten Ausführungsform ist vorgesehen, dass die Einsteckbuchse am Aufnahmeadapter in die Auslassöffnung eingepresst ist. In einfacher Weise kann dadurch eine abdichtende Anordnung zwischen der Einsteckbuchse und dem Gehäuse geschaffen sein. Alternativ kann auch vorgesehen sein, dass zwischen der Einsteckbuchse und der zumindest einen Auslassöffnung im Gehäuse ein Dichtungselement, insbesondere ein Dichtring oder eine O-Ringdichtung, abdichtend eingesetzt ist.

Zwischen dem Aufnahmeadapter und einem Boden des Gehäuses sowie benachbart zur Auslassöffnung ist zumindest ein Federelement vorgesehen. Dies ermöglicht, dass der Aufnahmeadapter relativ zum Boden im Gehäuse axial verschiebbar gelagert ist. Der Boden im Gehäuse kann gleichzeitig eine Begrenzung des Regulierraumes bilden. Durch diese Nachgiebigkeit können auch Toleranzen der Ventilanordnung und/oder ein Regulierraum des Gehäuses und/oder temperaturbedingte Änderungen ausgeglichen werden. Die Ventilanordnung ist durch eine Einstecköffnung in das Gehäuse einsetzbar und mit der Drehschieberanordnung zur Adapteraufnahme weisend in dem Regulierraum positioniert ist.

Das Federelement zur nachgiebigen Aufnahme des Aufnahmeadapters zum Gehäuse bzw. zur zumindest einen Auslassöffnung im Gehäuse kann als eine Wellenfeder, Spiralfeder, Tellerfeder, Gummifederelement oder als eine O-Ringdichtung ausgebildet sein. In Abhängigkeit der im Regulierraum herrschenden Drücke und sonstigen geometrischen Anforderungen kann ein solches Federelement ausgewählt und eingesetzt werden.

Die Drehschieberauflage ist bevorzugt aus Keramik ausgebildet. Zumeist ist die Steuerscheibe ebenfalls aus Keramik ausgebildet, so dass eine gleiche Paarung von Materialien aneinander liegen, die die Drehschieberanordnung bilden. Alternativ kann die Drehschieberauflage auch aus einem Metall mit einer geschliffenen oder gelappten Oberfläche und/oder mit einer Gleitbeschichtung oder aus einem Kunststoff mit einer Gleitbeschichtung ausgebildet sein.

Die Adapteraufnahme ist bevorzugt aus einem metallischen Werkstoff ausgebildet. Dieser kann im Hinblick auf den Einsatz des zu steuernden Mediums ausgewählt werden. Beispielsweise kann ein Edelmetall oder auch ein Leichtmetall eingesetzt werden.

Gemäß einer bevorzugten Ausführungsform des Ventils ist vorgesehen, dass in jede Auslassöffnung des Gehäuses jeweils ein Aufnahmeadapter einsetzbar ist, der nur eine Drehschieberaufnahme aufnimmt. Dadurch kann bei beispielsweise zwei Auslassöffnungen jede Drehschieberauflage unabhängig von der anderen mit seiner Dichtfläche an der Steuerscheibe anliegen und unabhängig von der anderen Drehschieberauflage ein Ausgleich im Versatz und/oder in Toleranzen für eine dichte Anordnung ermöglichen.

Gemäß einer weiteren bevorzugten Ausführungsform des Ventils ist vorgesehen, dass ausgehend von der Längsachse der Auslassöffnung oder der Einlassöffnung ein Radius R₁ bis zu einer Dichtlinie am Gehäuse gegeben ist, an welcher eine Dichtung anliegt und die Anschlussöffnung oder die Einlassöffnung radial zum Gehäuse abdichtet und ausgehend von der Längsachse der Auslassöffnung oder der Einlassöffnung ein Radius R₂ bis zu einer zwischen dem Drehschieber und der Drehschieberauflage gebildeten Dichtlinie gegeben ist und dass das Verhältnis von R₁:R₂ in einem Bereich zwischen 0,25 und 4 liegt. Dadurch kann in Abhängigkeit der wirkenden Drücke und/oder deren Wirkrichtung eine Anpresskraft des Drehschiebers an der Drehschieberauflage oder ein Lösen bzw. Abheben des Drehschiebers von der Drehschieberauflage eingestellt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht eines Mehrwegventils,
- Figur 2: eine schematische Seitenansicht des Mehrwegventils gemäß Figur 1,
- Figur 3: ein schematischer Längsschnitt des Mehrwegventils gemäß Figur 1,
- Figur 4: eine schematisch vergrößerte Schnittansicht einer Mehrwegventilanordnung des Mehrwegventils gemäß Figur 1,
- Figur 5: eine schematisch vergrößerte Ansicht der Drehschieberanordnung gemäß Figur 3 oder Figur 4
- Figur 6: eine schematisch vergrößerte Schnittansicht einer alternativen Ausführungsform der Drehschieberanordnung zu Figur 5,
- Figur 7: eine schematische Schnittansicht einer weiteren alternativen Ausführungsform der Drehschieberanordnung zu Figur 3 oder Figur 4,
- Figur 8: eine schematisch vergrößerte Ansicht einer weiteren alternativen Ausführungsform der Drehschieberanordnung zu Figur 5,
- Figur 9: eine schematische Ansicht einer alternativen Anordnung zu Figur 8,
- Figur 10: eine schematische Darstellung einer weiteren alternativen Anordnung zu Figur 9, und
- Figur 11: eine schematische Schnittansicht einer alternativen Ausführungsform eines Ventils zu Figur 1.

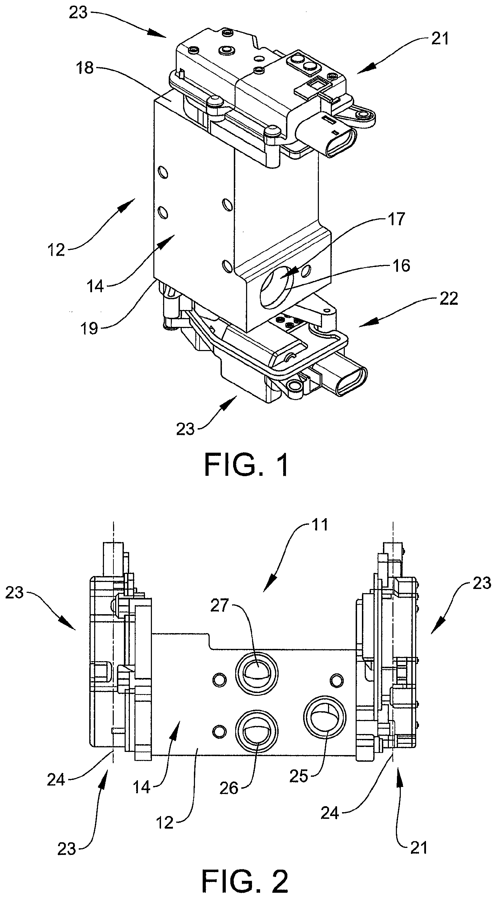

In Figur 1 ist eine perspektivische Ansicht eines Ventils 11 dargestellt. Dieses Ventil 11 ist als ein Mehrwegventil ausgebildet. Dieses Mehrwegventil kann zur Steuerung eines Kältemittelkreislaufes einer Kälteanlage mit Wärmepumpenfunktion dienen.

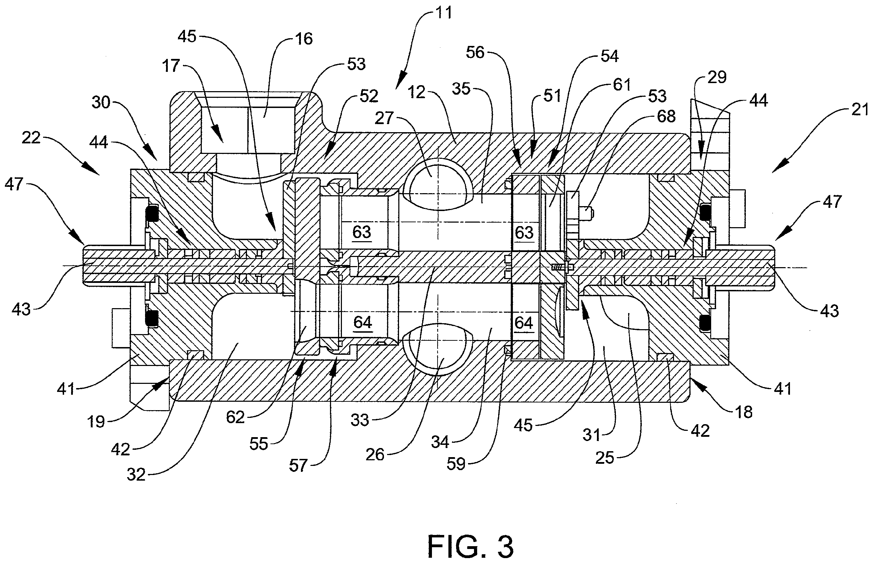

Dieses Ventil 11 umfasst ein Gehäuse 12, welches beispielsweise einen rechteckförmigen Querschnitt aufweist. Dieses Gehäuse 12 weist auf einer Stirnseite eine Montageschnittstelle 14 auf, in welcher beispielsweise Bohrungen zum Anbringen von Befestigungselementen vorgesehen sind. An einer weiteren Seitenfläche ist ein Anschluss 16 für eine Kältemittelzufuhr oder -abfuhr vorgesehen. An einer Stirnseite 18 und einer gegenüberliegenden Stirnseite 19 des Gehäuses 12 ist eine erste Ventilanordnung 21 und gegenüberliegend eine zweite Ventilanordnung 22 angeordnet. An diesen Ventilanordnungen 21, 22 ist jeweils nur ein Antrieb 23 zu sehen. Nachfolgend werden in den Schnittansichten gemäß den Figuren 3 bis 5 die Ventilanordnungen 21, 22 näher beschrieben:
In einer Seitenansicht des Ventils 11 gemäß Figur 2 sind in einer weiteren Seitenfläche des Gehäuses 12 beispielsweise drei weitere Anschlüsse 25, 26, 27 vorgesehen. Diese Anschlüsse 25, 26, 27 sind an einer Seitenfläche vorgesehen, welche vorzugsweise parallel zu einer Längsachse 24 der Antriebe 23 ausgerichtet ist.

Gemäß einer weiteren bevorzugten Ausführungsform des Ventils 11 kann vorgesehen sein, dass alle Anschlüsse 16, 25, 26, 27 an einer Seitenfläche des Gehäuses 12 angeordnet sind. Auch kann alternativ an jeder Seitenfläche des Gehäuses ein Anschluss 16, 25, 26, 27 vorgesehen sein. Die Anzahl der Anschlüsse je Seitenfläche des Gehäuses 12 und deren Ausrichtung kann an die Einbausituation angepasst sein.

In Figur 3 ist ein Längsschnitt des Ventils 11 gemäß Figur 1 dargestellt. Die jeweiligen Antriebe 23 der ersten Ventilanordnung 21 und zweiten Ventilanordnung 22 sind nur teilweise dargestellt.

Dieser Längsschnitt zeigt, dass das Gehäuse 12 für das Ventil 11 vorzugsweise einteilig ausgebildet ist. An den Stirnseiten 18, 19 ist jeweils eine Einstecköffnung 29, 30 vorgesehen, an die sich jeweils ein Regulierraum 31, 32 anschließt. Dem Regulierraum 31 ist der erste Anschluss 25 zugeordnet. Zwischen den beiden Regulierräumen 31, 32 sind zwei Kanäle 34, 35 vorgesehen, wobei der eine Kanal 34 mit dem Anschluss 26 und der weitere Kanal 35 mit dem Anschluss 27 verbunden ist. Der zweite Regulierraum 32, der dem ersten Regulierraum 31 gegenüberliegt, ist mit dem Anschluss 16 verbunden.

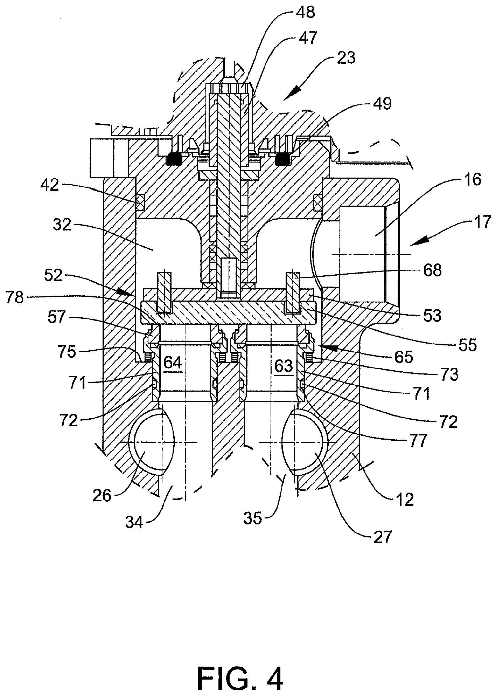

Dieses Ventil 11 nimmt im Gehäuse 12 einander gegenüberliegend die erste Ventilanordnung 21 und die zweite Ventilanordnung 22 auf. Diese sind jeweils über die Einstecköffnungen 29, 30 in den entsprechenden Regulierraum 31, 32 einsteckbar und über nicht näher dargestellte lösbare Befestigungsmittel darin fixiert. Die Ventilanordnungen 21, 22 weisen einen analogen Aufbau auf. Diese umfassen einen Grundkörper 41, der in die Einstecköffnung 29, 30 einsetzbar ist. Am Außenumfang des Grundkörpers ist zumindest ein Dichtelement 42 vorgesehen, um diesen Regulierraum 31, 32 nach außen abzudichten. Im Grundkörper 41 ist eine Welle 43 durch eine Wellenlagerung 45 rotierend geführt. Zusätzlich ist eine Abdichtung gegenüber dem Regulierraum durch eine Wellendichtung 44 vorgesehen, welche zwischen der Welle 43 und dem Grundkörper 41 angeordnet ist. An einem stirnseitigen Ende der Welle 43 ist ein Zahnritzel 47 vorgesehen, welches mit einem komplementären Antriebselement 48 des Antriebs 23 antriebsverbunden ist (Figur 4).

Zwischen dem Grundkörper 41 und dem Antrieb 23 beziehungsweise dessen Gehäuse kann zusätzlich zumindest eine Dichtung 49 (Figur 4) vorgesehen sein.

Dem Antrieb 23 gegenüberliegend ist die Welle 43 mit einer Drehschieberanordnung 51, 52 verbunden. Die Drehschieberanordnung 51 der ersten Ventilanordnung 21 weicht bevorzugt von der Drehschieberanordnung 52 der zweiten Ventilanordnung 22 ab. Die zweite Ventilanordnung 22 wird nachfolgend in Figur 4 noch näher beschrieben.

Zwischen der Drehschieberanordnung 51, 52 und der Welle 43 ist ein Mitnehmer 53 vorgesehen, der fest mit der Welle 43 verbunden ist und eine Drehbewegung eines Drehschiebers 54, 55 gegenüber einer Drehschieberauflage 57 der Drehschieberanordnung 51, 52 ansteuert. Die Welle 43 ist mit dem Mitnehmer 53 beispielsweise verschweißt, insbesondere mit Laser verschweißt, oder verlötet, verpresst oder vernietet.

Der Anschluss 25 ist als ein Einlass für ein Kältemittel ausgebildet. Somit liegt in diesem ersten Regulierraum 31 Hochdruck an. Die erste Ventilanordnung 21 ist hochdruckseitig im Regulierraum 31 vorgesehen und entsprechend ausgebildet.

Die Anschlüsse 26, 27 sind niederdruckseitig vorgesehen. Des Weiteren ist die zweite Ventilanordnung 22 im zweiten Regulierraum 32 niederdruckseitig angeordnet. Der Anschluss 16 ist als ein Auslass ausgebildet. Die Anschlüsse 26, 27, die zu den Kanälen 34, 35 münden, können sowohl als Einlass als auch als Auslass angesteuert werden, wobei unabhängig der Ansteuerung diese niederdruckseitig beaufschlagt sind.

Der Anschluss 25 vom Gehäuse 12 in den Regulierraum 31 sowie der Anschluss 16 vom zweiten Regulierraum 32 aus dem Gehäuse 12 heraus sind bevorzugt außermittig zur Längsachse der jeweiligen Ventilanordnung 21, 22 vorgesehen. Diese münden außermittig in die Regulierräume 31, 32 und führen das Kältemittel einem gerundeten Abschnitt des Grundkörpers 41 zu. Dadurch wird eine strömungsoptimierte Zuführung und/oder Abführung des Kältemittels ermöglicht. Des Weiteren weist die Eintrittskante des Anschlusses 25 in den Regulierraum 31 sowie eine Kante zwischen dem Regulierraum 32 und dem Anschluss 16 eine innere Fase auf, wodurch eine Reduzierung des Druckabfalls zwischen dem Anschluss 25 zum Regulierraum 31 und/oder vom Regulierraum 32 zum Anschluss 16 ermöglicht ist. Auch die Anschlüsse 26, 27 sind außermittig zu den Kanälen 34, 35 positioniert.

Die Regulierräume 31, 32 sind einander gegenüberliegend und derart zueinander ausgerichtet, dass nach dem Einsetzen der ersten und zweiten Ventilanordnung 21, 22 die Längsachsen der Wellen 43 vorzugsweise in einer gemeinsamen Längsachse liegen. Die Kanäle 34, 35 sind koaxial zur Längsachse des Gehäuses 12 beziehungsweise der Längsachse der Wellen 43 ausgerichtet. Alternativ kann vorgesehen sein, dass die Längsachsen der Wellen 43 auch parallel versetzt zueinander in einem gemeinsamen Gehäuse 12 ausgerichtet sein können. Auch ist möglich, dass die Längsachsen der beiden Wellen 43 der Ventilanordnung 21, 22 in einem Winkel < 180° in einem gemeinsamen Gehäuse 12 angeordnet sind. In Abhängigkeit von Einbauanordnung kann auch eine Ausrichtung der Regulierräume 31, 32 in einem Winkel von 90° oder einem Winkel von 90° bis 180° vorgesehen sein, wobei die Kanäle 34, 35 entsprechend strömungsgünstige Geometrien aufweisen.

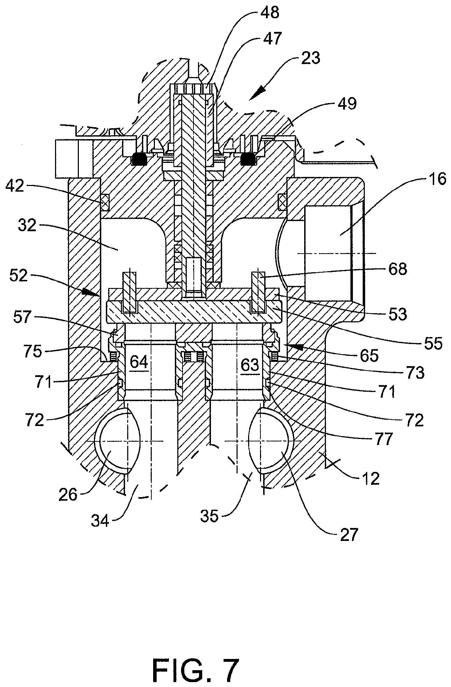

Die Drehschieberanordnungen 51, 52 weisen jeweils einen ersten drehbaren Drehschieber oder Steuerscheibe 54,55 auf, welche beispielsweise zwei Durchgangsöffnungen 61, 62 umfassen. Diesen Drehschiebern oder Steuerscheiben 54, 55 sind Drehschieberauflagen 57 zugeordnet. Auch diese weisen bevorzugt jeweils zwei Durchgangsöffnungen 63, 64 auf. Durch eine entsprechende Überdeckung oder einen Versatz des ersten Drehschiebers 54, 55 zur Drehschieberauflage 57 können die entsprechenden Durchgangsöffnungen gesperrt und vollständig freigegeben sowie einzeln oder beide teilweise geöffnet werden. Dies ist in den nachfolgenden Figuren 7 bis 12 und 14 beschrieben. Die jeweiligen Durchgangsöffnungen 63, 64 in der Drehschieberauflage 57 sind fluchtend zu den Kanälen 34, 35 ausgerichtet.

Der Drehschieber oder die Steuerscheibe 54, 55 und die Drehschieberauflage 57 sind bevorzugt aus Keramik ausgebildet. Auch können diese aus Kunststoff oder Metall ausgebildet sein.

Durch diese Ausgestaltung des Ventils 11 wird beispielsweise durch die erste Ventilanordnung 21 das über den als Einlass ausgebildeten Anschluss 25 eintretende Kältemittel entweder nur dem Kanal 34 oder nur dem Kanal 35 zugeführt oder beide Kanäle 34, 35 werden jeweils anteilig mit Kältemittel versorgt. In Abhängigkeit der Schaltposition der zweiten Drehschieberanordnung 52 der zweiten Ventilanordnung 21 kann beispielsweise ein in dem Kanal 34 anliegendes Kältemittel über den als Auslass ausgebildeten Anschluss 26 abströmen. Analoges gilt für das im Kanal 35 bereitgestellte Kältemittel, welches über den Anschluss 27 abgeführt werden kann. Auch kann eine Schaltstellung eingenommen werden, sodass der als Auslass ausgebildete Anschluss 16 das Kältemittel abführt.

In Figur 4 ist eine schematisch vergrößerte Schnittansicht der zweiten Ventilanordnung 22 dargestellt, welche im Folgenden nur als Ventilanordnung 22 bezeichnet wird. Diese Schnittansicht ist um 90° gegenüber der Schnittansicht in Figur 3 gedreht. Durch diese Schnittansicht wird offensichtlich, dass der Mitnehmer 53 über Stifte 68 an dem drehbaren Drehschieber 55 angreift und drehverbunden ist. Beispielsweise kann der Stift 68, insbesondere Passstift, in den Mitnehmer 53 eingepresst sein und in eine Vertiefung in den drehbaren Drehschieber 55 eingreifen. Dabei ist bevorzugt eine Presspassung zwischen Stift 68 und des Drehschiebers 55 vorgesehen. Bevorzugt sind die Stifte 68 mit einer Kunststoffhülse in Bohrungen des Drehschiebers 55 zur querkraftfreien Drehmomentübertragung eingepresst. Diese Verbindung zwischen dem Mitnehmer 18 und dem Drehschieber 55 kann auch bei der Drehschieberanordnung 51 gemäß Figur 4 vorgesehen sein.

Die im zweiten Regulierraum 32 angeordnete Drehschieberanordnung 52 ist aufgrund der herrschenden Druckverhältnisse abweichend zu der Drehschieberanordnung 51 ausgebildet. Im Regulierraum 32 liegt Niederdruck an. In den Kanälen 34, 35 liegt das Kältemittel noch mit Hochdruck an. Um eine abdichtende Anordnung zwischen der Drehschieberauflage 57 der zweiten Drehschieberanordnung 52 und dem Regulierraum 32 zu ermöglichen, ist vorgesehen, dass in den Kanal 34 und 35 jeweils eine Einsteckbuchse 71 eingesetzt ist. Diese ist mittels eines Dichtelements 72 zur Außenseite des Kanals 34, 35 abgedichtet. Diese Einsteckbuchse 71 ist in axialer Richtung zur Längsachse der Kanäle 34, 35 verschiebbar positioniert. Vorzugsweise ist ein Federelement 73 zwischen einer Schulter 74 der Einsteckbuchse 71 und einem Boden 75 des Regulierraumes 32 positioniert. Dadurch wird die Einsteckbuchse 71 in Richtung auf die Drehschieberanordnung 52 gedrückt. Eingangsseitig in Strömungsrichtung gesehen kann die Einsteckbuchse 71 eine Schräge 77 aufweisen um eine strömungsgünstige Anordnung zu bilden. Gegenüberliegend kann die Einsteckbuchse 71 eine Anlagefläche oder eine Aufnahme aufweisen, um an der Drehschieberauflage 57 anzulegen und/oder anzugreifen. Die Drehschieberauflage 57 kann durch zwei Ringkörper ausgebildet sein, die an der Einsteckbuchse 71 aufgenommen und gehalten werden. Diese können wiederum mit einer Dichtfläche 78 bzw. Gleitfläche an dem drehbaren Drehschieber oder der Steuerscheibe 55 anliegen.

Bei der in Figur 4 dargestellten Schnittansicht kann es sich auch um ein Ventil 11 handeln, bei welchem beispielsweise die Anschlüsse 26, 27 entfallen oder geschlossen sein können, so dass das Gehäuse 12 einen Anschluss 16 mit einer Einlassöffnung 17 und zwei Auslassöffnungen 34, 35 aufweist. Die Strömungsrichtung des Mediums kann von der Einlassöffnung 17 zudem oder den Auslassöffnungen 34, 35 vorgesehen sein. Auch kann die Strömungsrichtung in entgegengesetzter Richtung erfolgen, das heißt, dass der oder die Auslassöffnungen 34, 35 als Einlass ausgebildet sind und die Einlassöffnung 17 als Auslass.

Die Drehschieberanordnung 52 mit der Steuerscheibe 55 und mit zumindest einer Drehschieberauflage 57, vorzugsweise in Form einer drehfesten Steuerscheibe, ist durch die Anordnung und Aufnahme der Drehschieberauflage 57 in einem Aufnahmeadapter 65, der vorzugsweise die zumindest eine Einsteckbuchse 71 aufweisen kann, in beiden Durchströmungsrichtungen ansteuerbar.

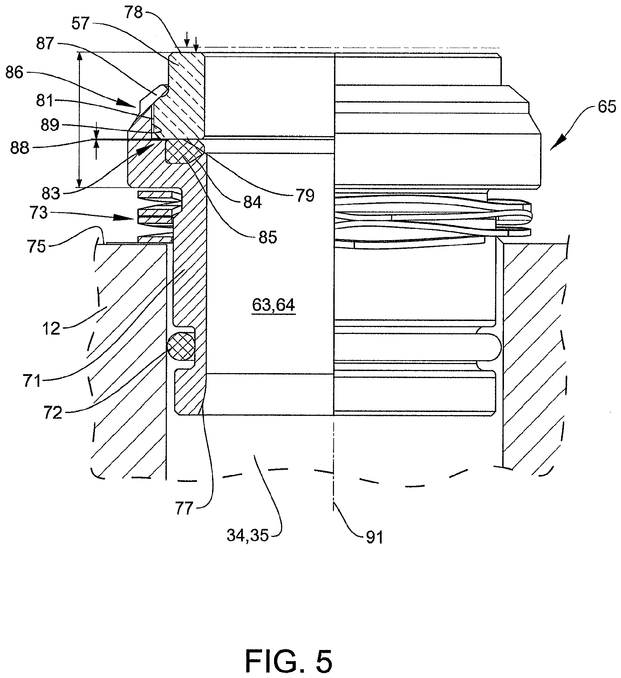

In Figur 5 ist die erste Ausführungsform für eine Anordnung der Drehschieberauflage 57 zur Auslassöffnung 34, 35 vergrößert dargestellt. Diese Ausführungsform entspricht der in den Figuren 3 und 4. Die Drehschieberauflage 57 ist durch den Aufnahmeadapter 65 aufgenommen und gehalten. Die Drehschieberauflage 57 ist kreisförmig ausgebildet und umfasst die Dichtfläche 78, welche zur Steuerscheibe 55 weist und an dieser anliegt. Die Drehschieberauflage 57 weist der Dichtfläche 78 gegenüberliegend eine Abstützfläche 79 auf. Am Außenumfang der Drehschieberauflage 57 ist ein Befestigungsabschnitt 81 vorgesehen, der zur Abstützfläche 79 weisend einen größeren Außenumfang als zur Dichtfläche 78 weisend umfasst. Die Drehschieberauflage 57 ist zu einer Stirnfläche 83 des Aufnahmeadapters 65 positioniert. In der Stirnfläche 83 ist eine Vertiefung 84 vorgesehen, welche zur Aufnahme eines elastisch nachgiebigen Elementes 85 dient. Dieses elastisch nachgiebige Element 85 positioniert die Abstützfläche 79 der Drehschieberauflage 57 mit Abstand zur Stirnfläche 83. Der Aufnahmeadapter 65 umfasst des Weiteren einen Halteabschnitt 86. Dieser umfasst eine zylindrische Umfangsfläche 89 sowie der Stirnfläche 83 gegenüberliegend einen Greifrand 87. Dieser Greifrand 87 umgreift oder hintergreift den Befestigungsabschnitt 81 der Drehschieberauflage 57. Durch diesen Greifrand 87 wird ein axialer Spalt 88 zwischen der Abstützfläche 79 der Drehschieberauflage 57 und der Stirnfläche 83 des Aufnahmeadapters 65 festgelegt. Dabei wird die Drehschieberauflage 57 unter Vorspannung des elastisch nachgiebigen Elementes 85 zur Stirnfläche 83 am Aufnahmeadapter 65 fixiert. Durch diesen axialen Spalt 88 kann die Drehschieberauflage 57 entlang einer Längsachse 91 der Auslassöffnung 34, 35 axial verschiebbar sein. Gleichzeitig kann die Drehschieberauflage 57 eine Kippbewegung zur Längsachse 91 relativ zum Aufnahmeadapter 65 ausgleichen.

Der Aufnahmeadapter 65 weist bevorzugt einstückig daran angeordnet die Einsteckbuchse 71 auf. Zur federnd nachgiebigen Anordnung des Aufnahmeadapters 65 in der Auslassöffnung 34, 35, insbesondere in axialer Richtung entlang der Längsachse 91, ist das zumindest eine Federelement 73 vorgesehen. Dieses Federelement 73 kann als Spiralfeder, Tellerfeder oder dergleichen ausgebildet sein. Bevorzugt ist eine Wellenfeder vorgesehen.

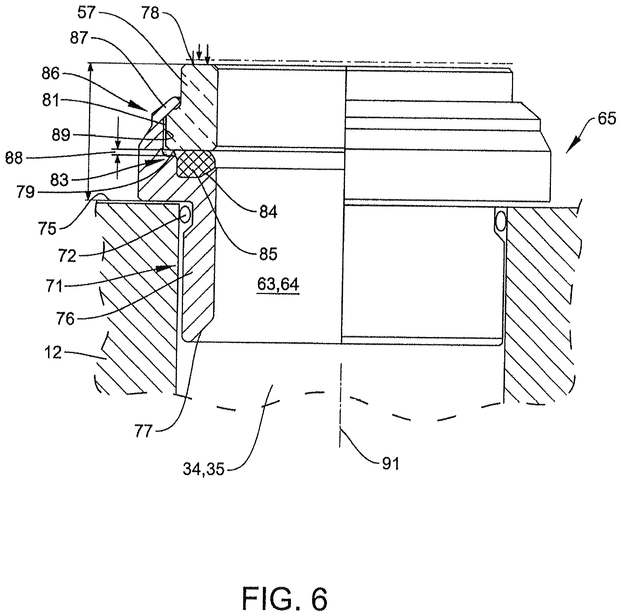

In Figur 6 ist eine alternative Ausgestaltung des Aufnahmeadapters 65 zur Aufnahme der Drehschieberauflage 57 gemäß Figur 5 vorgesehen. Bei dieser Ausführungsform ist vorgesehen, dass die Einsteckbuchse 71 als eine Einpressbuchse ausgebildet ist, welche unmittelbar in die Auslassöffnung 34, 35 eingepresst wird. Dadurch kann das Dichtelement 72 und das Federelement 73 gemäß der Ausführungsform in Figur 5 entfallen.

Die Anordnung und Aufnahme der Drehschieberauflage 57 zur Stirnfläche 83 des Aufnahmeadapters 65 entspricht der Ausführungsform gemäß Figur 5. Allerdings kann bei dieser Ausführungsform gemäß Figur 6 vorgesehen sein, dass der axiale Spalt 88 größer dimensioniert wird als bei der Ausführungsform gemäß Figur 5, da bei der Ausführungsform gemäß Figur 6 das Federelement 73 entfallen ist. Dadurch kann wiederum eine hinreichende Anpassung an Toleranzen nach dem Einsetzen der Ventilanordnung 22 in den Regulierraum 32 des Gehäuses 12 erfolgen.

In Figur 7 ist eine alternative Ausführungsform der Drehschieberanordnung 52 zu den Figuren 3 oder 4 dargestellt. Abweichend hierzu kann die Drehschieberauflage 57 als ein einziger ringförmiger Körper ausgebildet sein, der ein oder mehrere Durchgangsöffnungen 61 aufweist. Diese einteilige Drehschieberauflage 57 wird von dem Aufnahmeadapter 65, vorzugsweise mit wenigstens zwei Durchgangsöffnungen 63, 64, aufgenommen. Die Anordnung und Fixierung dieser Drehschieberauflage 57 zum Aufnahmeadapter 65 kann analog zu den Ausführungsformen in Figuren 5 oder 6 erfolgen. Der Aufnahmeadapter 65 weist der Stirnfläche 83 der Drehschieberauflage 57 gegenüberliegend zwei Einsteckbuchsen 71 auf, welche in die Auslassöffnungen 34, 35 einsetzbar sind. Diese Einsteckbuchsen 71 können jeweils separat ausgebildet sein oder gemeinsam an dem Aufnahmeadapter 65, vorzugsweise einstückig, vorgesehen sein.

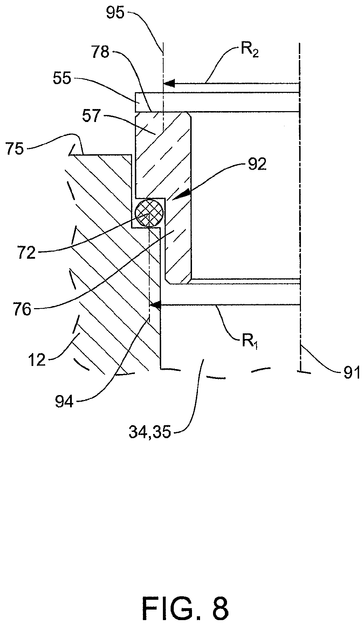

In Figur 8 ist eine schematisch vergrößerte Teilansicht einer alternativen Ausführungsform des Aufnahmeadapters 65 der zweiten Drehschieberanordnung 52 dargestellt. Diese alternative Ausführungsform ist in der Anzahl der Bauteile reduziert. Die Drehschieberauflage 57 als auch der Aufnahmeadapter 65 sowie die Einsteckbuchse 71 mit einem Hülsenabschnitt 76 sind in einem gemeinsamen Bauteil miteinander verschmolzen. Somit ist ein ringförmiger Körper vorgesehen, der an seiner oberen Stirnseite die Dichtfläche 78 umfasst. Gegenüberliegend ist der Hülsenabschnitt 76 ausgebildet, so dass diese konstruktiv einfach ausgebildete Drehschieberauflage 57 in die Auslassöffnung 34, 35 einsteckbar und positionierbar ist. Der Hülsenabschnitt 76 ist in Bezug auf die Wandstärke schmaler als die Dichtfläche 78 ausgebildet, so dass im Übergangsbereich eine Schulter 92 ausgebildet ist. In einem Übergangsbereich zwischen dem Boden 75 des Gehäuses 12 und einem Wandabschnitt der Auslassöffnung 34, 35 ist ebenfalls eine Schulter ausgebildet, welche in den Abmessungen an die Schulter 92 angepasst ist. Somit kann zwischen den beiden Schultern ein Dichtelement 72, insbesondere Dichtring, positioniert sein, um den Hülsenabschnitt 76 abdichtend in der Auslassöffnung 34, 35 zu führen. Vorteilhafterweise ist diese Drehschieberauflage 57 aus Keramik, insbesondere als ein Keramikring, ausgebildet, der mittels dem Dichtelement 72 federnd in der Auslassöffnung 34, 35 gelagert ist.

Bei dieser Ausführungsform erstreckt sich ausgehend von der Längsachse 91 der Auslassöffnung 34, 35 ein Radius R₁ bis zu einer Dichtlinie 94, welche zwischen dem Gehäuse 12 und der Schulter am Gehäuse 12, welche an die Auslassöffnung 34, 35 angrenzt, vorgesehen ist. Zwischen dem in Figur 8 dargestellten Drehschieber 55 und der Dichtfläche 78 der Drehschieberauflage 57 ist eine Dichtwirkung vorgesehen, welche gemittelt auf die Breite der Dichtfläche 78 eine Dichtlinie 95 bildet. Der Radius R₂ erstreckt sich von der Längsachse 91 bis zur Dichtlinie 95. Der Radius R₂ ist geringfügig kleiner als der Radius R₁. Durch Verlegung der Dichtlinie 95 radial nach außen kann der Radius R₂ dem Radius R₁ entsprechen oder auch größer sein. Bei dem dargestellten Beispiel wie auch bei dem Fall, dass R₁ gleich R₂ ist, kann das gleiche Kraftverhältnisse bezüglich einer Anpressung des Mediums auf die Drehschieberauflage 57 einerseits sowie eine Reaktionskraft der Drehschieberauflage 57 in Richtung Drehschieber 55 andererseits bestehen. Diese Verhältnisse gelten in Analogie auch bei den Ausführungsformen gemäß den Figuren 5, 6 und/oder 7. Der Radius R₁ beschreibt den Radius zwischen dem Dichtelement 72 am Gehäuse 12 und der Längsachse 91. Der Radius R₂ beschreibt den Radius zwischen der Dichtfläche 78 und dem aufliegenden Drehschieber 55 zur Längsachse 91 bzw. einer resultierenden Dichtlinie 95.

Die Drehschieberanordnung 52 kann mit einer Druckbeaufschlagung durch das zu steuernde Medium in beiden Richtungen beaufschlagt werden. Zum einen kann das unter Druck stehende Medium über die Einlassöffnung 17 dem Gehäuse 12 zugeführt werden und somit eingangsseitig auf die zweite Drehschieberanordnung 52 bzw. zunächst auf den Drehschieber 55 wirken. Alternativ kann das unter Druck stehende Medium auch über die Auslassöffnung 34, 35 dem Gehäuse 12 zugeführt werden, so dass druckeingangsseitig zunächst die Drehschieberauflage 57 mit Druck beaufschlagt wird, die dann auf den Drehschieber 55 wirkt.

In Abhängigkeit der Betriebsart und/oder in Abhängigkeit der Auslegungsverhältnisse können durch die Geometrie des Drehschiebers 55 und der Drehschieberauflage 57 unterschiedliche Anpressverhältnisse geschaffen werden.

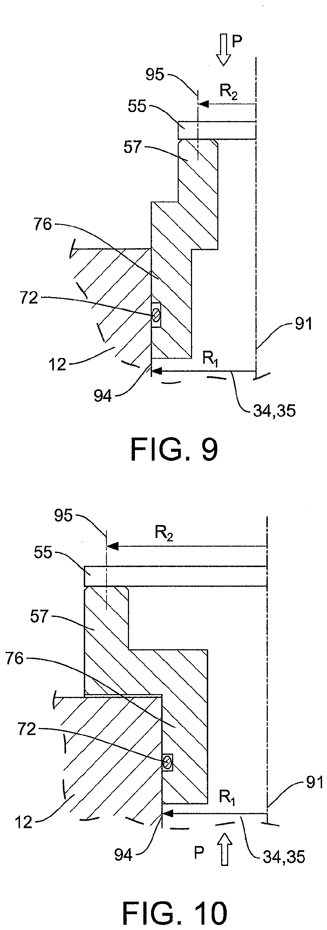

In Figur 9 ist eine weitere Ausführungsform zu Figur 8 dargestellt. Der Radius R₁ ist größer als der Radius R₂ ausgebildet. Der Radius R₁ erstreckt sich zwischen der Längsachse 91 und der Umfangswand der Auslassöffnung 34, 35, an der das Dichtelement 72 anliegt. Bei einem über die Einlassöffnung 17 auf die Drehschieberanordnung 52 wirkenden Druck wirkt ein verringerter Druck auf den Drehschieber 55 im Vergleich zur Ausführungsform gemäß Figur 8. Sofern die Drehschieberanordnung 52 über die Auslassöffnung 34, 35 mit Druck beaufschlagt wird, kann eine erhöhte Anpresskraft der Drehschieberauflage 57 auf den Drehschieber 55 erzielt werden. Somit kann auch bei hohem Druck ein sicheres Anliegen und Abdichten zwischen der Dichtfläche 78 der Drehschieberauflage 57 und dem Drehschieber 55 durch die Wahl des Radius R₁ im Verhältnis zum Radius R₂ gegeben sein.

In Figur 10 ist eine alternative Ausführungsform zu Figur 9 in der Geometrie des Drehschiebers 55 und der Drehschieberauflage 57 dargestellt. Bei dieser Ausführungsform ist der Radius R₁ kleiner als der Radius R₂ ausgebildet. Aufgrund der größeren Fläche des Drehschiebers 55 bedingt durch den Radius R₂ wird eine geringe Anpresskraft der Drehschieberauflage 57 auf den Drehschieber 55 erzielt, sofern das unter Druck stehende Medium über die Auslassöffnung 34, 35 zugeführt wird und über die Einlassöffnung 17 abströmt. Sofern sich die Zuströmrichtung des unter Druck stehenden Mediums umkehrt, also das Medium über die Einlassöffnung 17 zugeführt wird, kann eine hohe Anpresskraft des Drehschiebers 55 auf die Drehschieberauflage 57 erzielt werden und durch eine erhöhte Dichtigkeit zwischen dem Drehschieber 55 und der Drehschieberauflage 57 gegeben sein.

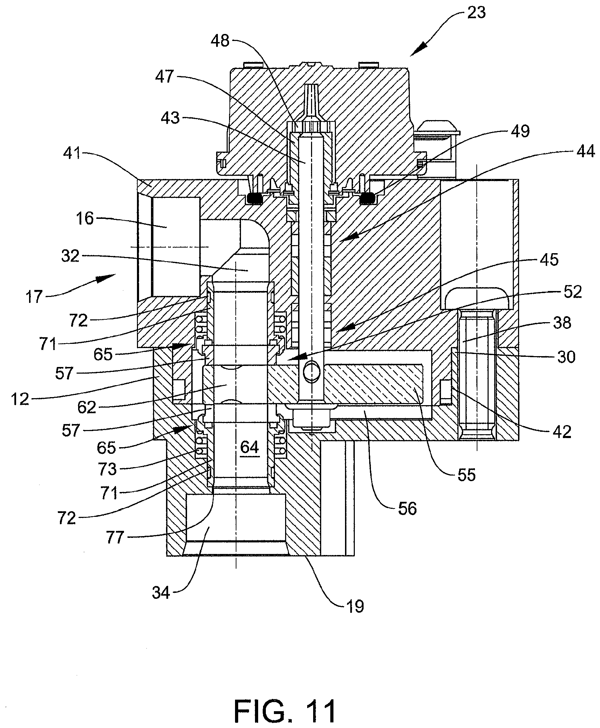

In Figur 11 ist eine schematische Schnittansicht einer alternativen Ausführungsform des als Mehrwegventil ausgebildeten Ventils 11 gemäß Figur 1 dargestellt. Bei dieser Ausführungsform des Ventils 11 handelt es sich um ein Einwegventil. Dieses Einwegventil 11 umfasst einen Durchströmungskanal, der geöffnet oder geschlossen werden kann. Auch sind verschiedene Querschnitte zwischen einer geschlossenen und offenen Position ansteuerbar. Dieses Einwegventil 11 ist bevorzugt als ein sogenanntes Bi-Flow-Ventil ausgebildet. Eine Durchströmung des Mediums und Steuerung des Volumenstroms durch das Ventil kann wahlweise in beiden Strömungsrichtungen erfolgen.

Das Ventil 11 umfasst ein Gehäuse 12, welches an einer Stirnseite 19 eine Auslassöffnung 34 mit einem Anschluss aufweist. Dieser Stirnseite 19 gegenüberliegend ist eine Einstecköffnung 30 vorgesehen, in welche eine Ventilanordnung 22 positionierbar ist. Diese Ventilanordnung 22 umfasst einen Grundkörper 41, der in die Einstecköffnung 30 einsetzbar und beispielsweise mit einem Befestigungsmittel 38 mit dem Gehäuse 12 verbindbar, insbesondere verschraubbar, ist. Zwischen dem Grundkörper 41 und dem Gehäuse 12 ist zumindest ein Dichtelement 42 vorgesehen. Dadurch wird diese Schnittstelle abgedichtet. Des Weiteren dient dieses Dichtelement 42 auch dazu, um einen Regulierraum 32 nach außen abzudichten. Im Grundkörper 41 ist eine Welle 43 durch eine Wellenlagerung 45 rotierend geführt. Zusätzlich ist eine Abdichtung gegenüber dem Regulierraum 32 durch eine Wellendichtung 44 vorgesehen, welche zwischen der Welle 43 und dem Grundkörper 41 angeordnet ist. An einem stirnseitigen Ende der Welle 43 ist ein Zahnritzel 47 vorgesehen, welches mit einem komplementären Antriebselement 48 des Antriebs 23 antriebsverbunden ist.

Zwischen dem Grundkörper 41 und dem Antrieb 23 beziehungsweise dessen Gehäuse kann zusätzlich eine Dichtung 49 vorgesehen sein.

Dem Antrieb 23 gegenüberliegend ist die Welle 43 mit einer Drehschieberanordnung 52 verbunden. Diese Drehschieberanordnung 52 weicht von der Drehschieberanordnung 51, 52 gemäß Figur 4 teilweise ab. Diese Drehschieberanordnung 52 umfasst einen Drehschieber 55, der mit der Welle 43 drehfest verbunden ist. Dieser Drehschieber 55 ist in einem Gehäuseabschnitt 56 frei drehbar positioniert, der zwischen dem Grundkörper 41 und dem Gehäuse 12 ausgebildet ist.

Der Grundkörper 41 weist einen Anschluss 16 auf, der in eine Einlassöffnung 17 übergeht. Diese Einlassöffnung 17 mündet über den Regulierraum 32 zum Drehschieber 55. Gegenüberliegend ist die Auslassöffnung 34 vorgesehen. Zwischen dem Drehschieber 55 und der Auslassöffnung 34 ist ebenfalls ein Regulierraum 32 ausgebildet. In Abhängigkeit der Strömungsrichtung des Mediums durch das Ventils 11 ist stromauf des Drehschiebers 55 jeweils der Regulierraum 32 gebildet. In diesem Regulierraum 32 liegt dann Hochdruck an.

Alternativ kann der Anschluss 16 am Gehäuse 12 analog zur Ausführungsform gemäß Figur 4 angeordnet und der Grundkörper 41 von oben in das Gehäuse 12 eingesetzt werden.

Der Drehschieber 55 der Drehschieberanordnung 52 weist zumindest eine Durchgangsöffnung 62 auf. Durch die Ansteuerung einer Drehbewegung des Drehschiebers 55 kann eine Überdeckung oder ein Versatz des Drehschiebers 55 zur Drehschieberauflage 57 ansteuerbar sein, sodass die zumindest eine Durchgangsöffnung 62 gesperrt, teilweise geöffnet oder vollständig geöffnet ist. Beidseitig zum Drehschieber 55 ist jeweils eine Drehschieberauflage 57 angeordnet. Die beiden einander gegenüberliegenden Drehschieberauflagen 57 können gleich ausgebildet sein. Bevorzugt weisen die Drehschieberauflagen 57 eine Ausführungsform gemäß den Figuren 5, 6, 8, 9 und/oder 10 auf, sodass auf diese Ausführungsformen jeweils vollumfänglich Bezug genommen wird.

Durch die einander gegenüberliegende Anordnung der Drehschieberauflagen 57 zum Drehschieber 55 kann der Drehschieber 55 zur Welle 43 in axialer Richtung auf und ab bewegbar - also schwimmend - gelagert sein. In Rotationsrichtung ist bevorzugt eine drehfeste Verbindung zwischen dem Drehschieber 55 und der Welle 43 vorgesehen. Durch diese schwimmende Lagerung des Drehschiebers 55 zwischen den spiegelbildlich zu im Drehschieber 55 angeordneten Drehschieberauflagen 57 kann das Ventil 11 in beiden Richtungen durchströmt werden. Zudem können unabhängig der jeweiligen Durchströmungsrichtung gleiche Verhältnisse für die Drehschieberanordnung 52 gegeben sein. Dadurch ist dieses Ventil 11, insbesondere dieses Einwegventil 11, universell einsetzbar.

## Patentansprüche

1. Ventil zur Steuerung eines Kältemittelkreislaufes einer Kälteanlage, vorzugsweise mit einer Wärmepumpenfunktion,
- mit einem Gehäuse (12), welches zumindest eine Einlassöffnung (17) und zumindest eine Auslassöffnung (34, 35) aufweist,
- mit einem in dem Gehäuse (12) vorgesehenen Regulierraum (32), der sich zwischen der zumindest einen Einlassöffnung (17) und der zumindest einen Auslassöffnung (34, 35) erstreckt,
- mit einer am Gehäuse (12) vorgesehenen Einstecköffnung (29), welche an den Regulierraum (32) angrenzt,
- mit einer Ventilanordnung (22), die zumindest teilweise in den Regulierraum (32) einsetzbar ist, durch welche ein Strömungsweg eines Mediums zwischen der zumindest einen Einlassöffnung (17) und der zumindest einen Auslassöffnung (34, 35) ansteuerbar ist,
- mit einer in dem Regulierraum (32) angeordneten Drehschieberanordnung (52) der Ventilanordung (22), welche eine Steuerscheibe (55) aufweist, die relativ zur zumindest einen Drehschieberauflage (57) drehbar ist, wobei die zumindest eine Drehschieberauflage (57) drehfest zum Gehäuse (12) vorgesehen und der zumindest einen Auslassöffnung (34, 35) zugeordnet ist,
**dadurch gekennzeichnet,**
- **dass** die zumindest eine Drehschieberauflage (57) von einem Aufnahmeadapter (65) gehalten ist, der mit dem Gehäuse (12) verbindbar ist, und
- **dass** die zumindest eine Drehschieberauflage (57) schwimmend zum Gehäuse (12) gelagert ist.

2. Ventil nach Anspruch 1, **dadurch gekennzeichnet, dass** die zumindest eine Drehschieberauflage (57) in axialer Richtung zur Längsachse (91) der zumindest einen Auslassöffnung (34, 35) und/oder der zumindest einen Einlassöffnung (17) schwimmend gelagert ist.

3. Ventil nach Anspruch 2, **dadurch gekennzeichnet, dass** die zumindest eine Drehschieberauflage (57) zumindest abschnittsweise, vorzugsweise durch einen daran angeordneten Hülsenabschnitt (76), in die Auslassöffnung (34, 35) eingreift, und vorzugsweise schwimmend zum Gehäuse (12) gelagert ist.

4. Ventil nach Anspruch 1, **dadurch gekennzeichnet, dass** zwischen einer Stirnfläche (83) des Aufnahmeadapters (65) und einer Abstützfläche (79) der Drehschieberauflage (57), die der zur Steuerscheibe (55) weisenden Dichtfläche (78) der Drehschieberauflage (57) gegenüberliegt, ein elastisch nachgiebiges Element (85) vorgesehen ist und vorzugsweise das elastisch nachgiebige Element (85) in einer Vertiefung der Stirnfläche (83) und/oder der Abstützfläche (79) vorgesehen ist.

5. Ventil nach einem der Ansprüche 1 oder 4, **dadurch gekennzeichnet, dass** der Aufnahmeadapter (65) einen die Stirnfläche (83) umgebenden und an einen Außenumfang angrenzenden Halteabschnitt (86) aufweist, der einen Befestigungsabschnitt (81) der Drehschieberauflage (57), vorzugsweise einen zylindrischen Befestigungsabschnitt (81) am Außenumfang der Drehschieberauflage (57), umgreift.

6. Ventil nach Anspruch 5, **dadurch gekennzeichnet, dass** der Halteabschnitt (86) ausgehend von der Stirnfläche (83) des Aufnahmeadapters (65) eine zylindrische Umfangsfläche (89) aufweist, durch welche die Drehschieberauflage (57) zentrisch zum Aufnahmeadapter (65) geführt ist und an einem stirnseitigen Ende ein Greifrand (87) aufweist, das den Befestigungsabschnitt (81) der Drehschieberauflage (57) umgreift oder hintergreift.

7. Ventil nach Anspruch 6, **dadurch gekennzeichnet, dass** in Abhängigkeit der Höhe der zylindrischen Umfangsfläche (89) und/oder der Länge des Greifrandes (87) des Halteabschnitts (86) und/oder der Höhe des Befestigungsabschnitts (81) der Drehschieberauflage (57) ein axialer Spalt (88) zwischen der Abstützfläche (79) der Drehschieberauflage (57) und der Stirnfläche (83) der Adapteraufnahme (65) einstellbar ist, welches vorzugsweise größer als 0,01 mm ist.

8. Ventil nach einem der Ansprüche 1, 4 bis 7, **dadurch gekennzeichnet, dass** der Aufnahmeadapter (65) zumindest eine Einsteckbuchse (71) aufweist, welche in die zumindest eine Auslassöffnung (34, 35) im Gehäuse (12) einsteckbar ist und vorzugsweise die Einsteckbuchse (71) in die Auslassöffnung (34, 35) eingepresst oder mit einem Dichtelement (72) abdichtend in die Auslassöffnung (34, 35) eingesteckt ist.

9. Ventil nach einem der Ansprüche 1, 4 bis 8, **dadurch gekennzeichnet, dass** zwischen dem Aufnahmeadapter (65) und einem Boden (75) des Gehäuses (12), vorzugsweise des Bodens (75) im Regulierraum (32), benachbart zur Auslassöffnung (34, 35) zumindest ein Federelement (73) vorgesehen ist.

10. Ventil nach Anspruch 9, **dadurch gekennzeichnet, dass** das zumindest eine Federelement (73) als eine Wellenfeder, Spiralfeder, Tellerfeder, O-Ringdichtung oder Gummifederelement ausgebildet ist.

11. Ventil nach einem der vorhergehenden Ansprüche, **dadurch gekennzeichnet, dass** die Drehschieberauflage (57) aus Keramik ausgebildet ist, oder dass die Drehschieberauflage (57) aus einem Metall mit einer geschliffenen oder gelappten Oberfläche und/oder mit einer Gleitbeschichtung ausgebildet ist oder dass die Drehschieberauflage (57) aus einem Kunststoff, vorzugsweise mit einer Gleitbeschichtung, ausgebildet ist.

12. Ventil nach einem der Ansprüche 1, 4 bis 11, **dadurch gekennzeichnet, dass** die Adapteraufnahme (65) aus einem metallischen Material, insbesondere Edelmetall oder Leichtmetall, oder aus Kunststoff oder einem Metall-Kunststoff-Verbundmaterial ausgebildet ist.

13. Ventil nach einem der Ansprüche 1, 4 bis 12, **dadurch gekennzeichnet, dass** bei mehreren Auslassöffnungen (34, 35) in jeweils eine Auslassöffnung (34, 35) ein Aufnahmeadapter (65) einsetzbar ist, der jeweils nur eine Drehschieberaufnahme (57) aufnimmt.

14. Ventil nach einem der vorhergehenden Ansprüche, **dadurch gekennzeichnet, dass** ausgehend von der Längsachse (91) der Auslassöffnung (34, 35) oder der Einlassöffnung (17) ein Radius R₁ bis zu einer Dichtlinie (94) am Gehäuse (12) gegeben ist, an welcher eine Dichtelement (72) anliegt und die Auslassöffnung (34, 35) oder der Einlassöffnung (17) radial zum Gehäuse (12) abdichtet und ausgehend von der Längsachse (91) der Auslassöffnung (34, 35) oder der Einlassöffnung (17) ein Radius R₂ bis zu einer zwischen der Steuerscheibe (55) und der Drehschieberauflage (57) gebildeten Dichtlinie (95) gegeben ist, und dass das Verhältnis von R₁:R₂ in einem Bereich zwischen 0,25 und 4 liegt.

## Claims

1. Valve for controlling a coolant circuit of a refrigerating system, preferably having a heat pump function,
- having a housing (12), which has at least one inlet opening (17) and at least one outlet opening (34, 35),
- having a regulating chamber (32) provided in the housing (12), which extends between the at least one inlet opening (17) and the at least one outlet opening (34, 35),
- having a plugging opening (29) provided on the housing (12), which is adjacent to the regulating chamber (32),
- having a valve arrangement (22), which is insertable at least partially into the regulating chamber (32), by means of which a flow path of a medium between the at least one inlet opening (17) and the at least on outlet opening (34, 35) is controllable,
- having a rotary slide arrangement (52), arranged in the regulating chamber (32) of the valve arrangement (22), which has a control disc (55), which is rotatable in relation to the at least one rotary slide support (57), wherein the at least one rotary slide support (57) is provided non-rotationally to the housing (12) and is allocated to the at least one outlet opening (34, 35), **characterised in that**
- that the at least one rotary slide support (57) is held by a receiving adapter (65), which is connectable to the housing (12), and
- the at least one rotary slide support (57) is mounted floatingly to the housing (12).

2. Valve according to claim 1, **characterised in that** the at least one rotary slide support (57) is mounted floatingly in the axial direction to the longitudinal axis (91) of the at least one outlet opening (34, 35) and/or the at least one inlet opening (17).

3. Valve according to claim 2, **characterised in that** the at least one rotary slide support (57) engages in the outlet opening (34, 35) at least in sections, preferably by a sleeve portion (76) arranged thereon, and is preferably mounted floatingly to the housing (12).

4. Valve according to claim 1, **characterised in that** an elastically flexible element (85) is provided between an end face (83) of the receiving adapter (65) and a support surface (79) of the rotary slide support (57), which is opposite the sealing surface (78) pointing towards the control disc (55) of the rotary slide support (57) and preferably the elastically flexible element (85) is provided in a recess of the end face (83) and/or the support surface (79).

5. Valve according to one of claims 1 or 4, **characterised in that** the receiving adapter (65) has a holding portion (86) surrounding the end face (83) and abutting on an outer periphery, which engages around a fixing portion (81) of the rotary slide support (57), pref-erably a cylindrical fixing portion (81) on the outer periphery of the rotary slide support (57).

6. Valve according to claim 5, **characterised in that** the holding por-tion (86) has a cylindrical peripheral surface (89) starting from the end face (83) of the receiving adapter (65), by means of which the rotary slide support (57) is guided centrally to the receiving adapter (65) and has a gripping element (87) on an end face end, which engages around or engages behind the fixing portion (81) of the rotary slide support (57).

7. Valve according to claim 6, **characterised in that**, depending on the height of the cylindrical peripheral surface (89) and/or the length of the gripping edge (87) of the holding portion (86) and/or the height of the fixing portion (81) of the rotary slide support (57), an axial clearance (88) is settable between the support sur-face (79) of the rotary slide support (57) and the end face (83) of the adapter receiver (65), which is preferably greater than 0.01mm.

8. Valve according to one of claims 1, 4 to 7, **characterised in that** the receiving adapter (65) has at least one plugging sleeve (71), which is pluggable into the at least one outlet opening (34, 35) in the housing (12), and preferably the plugging sleeve (71) is pressed into the outlet opening (34, 35) or is plugged into the out-let opening (34, 35) in a sealing manner with a sealing ring (72).

9. Valve according to one of claims 1, 4 to 8, **characterised in that** at least one spring element (73) is provided between the receiving adapter (65) and a base (75) of the housing (12), preferably the base (75) in the regulating chamber (32), adjacent to the outlet opening (34, 35).

10. Valve according to claim 9, **characterised in that** the at least one spring element (73) is formed as a wave spring, coil spring, disc spring, O-ring seal or rubber spring element.

11. Valve according to one of the preceding claims, **characterised in that** the rotary slide support (57) is formed from ceramic, or the rotary slide support (57) is formed from a metal with a polished or lobed surface and/or with a sliding coating, or the rotary slide support (57) is formed from a plastic, preferably with a sliding coating.

12. Valve according to one of claims 1, 4 to 11, **characterised in that** the adapter receiver (65) is formed from a metallic material, in par-ticular noble metal or light metal, or made of plastic or a metal plastic compound material.

13. Valve according to one of claims 1, 4 to 12, **characterised in that**, with several outlet openings (34, 35), a receiving adapter (65) is insertable in each case into an outlet opening (34, 35), which in each case receives one rotary slide receiver (57).

14. Valve according to one of the preceding claims, **characterised in that**, starting from the longitudinal axis (91) of the outlet opening (34, 35) or the inlet opening (17), a radius R1 up to a sealing line (94) on the housing (12) is given, on which a seal (72) abuts and seals the port opening (34, 35) or the inlet opening (17) radially to the housing (12) and, starting from the longitudinal axis (91) of the outlet opening (34, 35) or the inlet opening (17), a radius R2 up to a sealing line (95) formed between the rotary slider (55) and the rotary slide support (57) is given, and the ratio of R1:R2 ranges from 0.25 and 4.

## Revendications

1. Soupape destinée à commander un circuit d'agent réfrigérant d'une installation frigorifique, de préférence équipée d'une fonction de pompe à chaleur,
- pourvue d'un boîtier (12) qui présente au moins un orifice d'entrée (17) et au moins un orifice de sortie (34, 35),
- pourvue d'un espace de régulation (32) qui est prévu dans le boîtier (12) et qui s'étend entre ledit au moins un orifice d'entrée (17) et ledit au moins un orifice de sortie (34, 35),
- pourvue d'un orifice d'insertion (29) qui est prévu sur le boîtier (12) et qui est contigu à l'espace de régulation (32),
- pourvue d'un ensemble de soupape (22) qui peut être inséré au moins partiellement dans l'espace de régulation (32) et grâce auquel un trajet de flux d'un fluide peut être activé entre ledit au moins un orifice d'entrée (17) et ledit au moins un orifice de sortie (34, 35),
- pourvue d'un ensemble de tiroir rotatif (52) de l'ensemble de soupape (22) qui est disposé dans l'espace de régulation (32) et qui présente un disque de commande (55) qui peut tourner par rapport à au moins un support de tiroir rotatif (57), ledit au moins un support de tiroir rotatif (57) étant prévu de manière à ne pas tourner par rapport au boîtier (12) et étant affecté audit au moins un orifice de sortie (34, 35),
**caractérisée en ce que**
- ledit au moins un support de tiroir rotatif (57) est maintenu par un adaptateur de réception (65) qui peut être assemblé au boîtier (12), et
- ledit au moins un support de tiroir rotatif (57) est logé de manière flottante par rapport au boîtier (12) .

2. Soupape selon la revendication 1, **caractérisée en ce que** ledit au moins un support de tiroir rotatif (57) est logé de manière flottante en sens axial par rapport à l'axe longitudinal (91) dudit au moins un orifice de sortie (34, 35) et/ou dudit au moins un orifice d'entrée (17).

3. Soupape selon la revendication 2, **caractérisée en ce que** ledit au moins un support de tiroir rotatif (57) entre en prise au moins partiellement, et ce de préférence grâce à une partie de manchon (76) disposée sur celui-ci, dans l'orifice de sortie (34, 35) et est logé de préférence de manière flottante par rapport au boîtier (12).

4. Soupape selon la revendication 1, **caractérisée en ce qu'**un élément (85) élastiquement flexible est prévu entre une face frontale (83) de l'adaptateur de réception (65) et une surface d'appui (79) du support de tiroir rotatif (57) qui est située à l'opposé de la surface d'étanchéité (78) dudit support de tiroir rotatif (57) laquelle est tournée vers le disque de commande (55) et **en ce que** l'élément (85) élastiquement flexible est prévu de préférence dans un creux de la face frontale (83) et/ou de la surface d'appui (79).

5. Soupape selon l'une quelconque des revendications 1 ou 4, **caractérisée en ce que** l'adaptateur de réception (65) présente une partie de retenue (86) qui entoure la face frontale (83) et est contiguë à une circonférence extérieure et laquelle enserre une partie de fixation (81) du support de tiroir rotatif (57), de préférence une partie de fixation (81) cylindrique située sur la circonférence extérieure du support de tiroir rotatif (57).

6. Soupape selon la revendication 5, **caractérisée en ce que** la partie de retenue (86) présente, à partir de la face frontale (83) de l'adaptateur de réception (65), une surface circonférentielle (89) cylindrique grâce à laquelle le support de tiroir rotatif (57) est guidé de manière centrale par rapport à l'adaptateur de réception (65), et présente, à une extrémité située côté frontal, un bord de préhension (87) qui enserre ou maintient par l'arrière la partie de fixation (81) du support de tiroir rotatif (57).

7. Soupape selon la revendication 6, **caractérisée en ce qu'**en fonction de la hauteur de la surface circonférentielle cylindrique (89) et/ou de la longueur du bord de préhension (87) de la partie de retenue (86) et/ou de la hauteur de la partie de fixation (81) du support de tiroir rotatif (57) peut être réglée une fente axiale (88), de préférence supérieure à 0,01 mm, entre la surface de retenue (79) du support de tiroir rotatif (57) et la face frontale (83) de l'adaptateur de réception (65).

8. Soupape selon l'une quelconque des revendications 1, 4 à 7, **caractérisée en ce que** l'adaptateur de réception (65) présente au moins une douille d'insertion (71) qui peut être insérée dans ledit au moins un orifice de sortie (34, 35) prévu dans le boîtier (12), et **en ce que** de préférence la douille d'insertion (71) est pressée dans l'orifice de sortie (34, 35) ou est insérée de manière étanche dans l'orifice de sortie (34, 35) à l'aide d'un élément d'étanchéité (72).

9. Soupape selon l'une quelconque des revendications 1, 4 à 8, **caractérisée en ce qu'**au moins un élément élastique (73) est prévu de manière contiguë à l'orifice de sortie (34, 35), entre l'adaptateur de réception (65) et un fond (75) du boîtier (12), de préférence le fond (75) de l'espace de régulation (32) .

10. Soupape selon la revendication 9, **caractérisée en ce que** ledit au moins un élément élastique (73) est réalisé sous la forme d'un ressort ondulé, d'un ressort en spirale, d'un ressort à disque, d'un joint torique ou d'un élément élastique en caoutchouc.

11. Soupape selon l'une quelconque des revendications précédentes, **caractérisée en ce que** le support de tiroir rotatif (57) est réalisé en céramique, ou **en ce que** le support de tiroir rotatif (57) est réalisé en un métal présentant une surface polie ou lobée et/ou un revêtement de glissement, ou **en ce que** le support de tiroir rotatif (57) est réalisé en une matière plastique présentant de préférence un revêtement de glissement.

12. Soupape selon l'une quelconque des revendications 1, 4 à 11, **caractérisée en ce que** l'adaptateur de réception (65) est réalisé en un matériau métallique, en particulier un métal noble ou un métal léger, ou en matière plastique ou en un matériau composite métal-plastique.

13. Soupape selon l'une quelconque des revendications 1, 4 à 12, **caractérisée en ce que** dans le cas de plusieurs orifices de sortie (34, 35), un seul adaptateur de réception (65) peut être inséré respectivement dans chaque orifice de sortie (34, 35) et ne reçoit respectivement qu'une seule réception de tiroir rotatif (57).

14. Soupape selon l'une quelconque des revendications précédentes, **caractérisée en ce qu'**à partir de l'axe longitudinal (91) de l'orifice de sortie (34, 35) ou de l'orifice d'entrée (17), un rayon R1 s'étend jusqu'à une ligne d'étanchéité (94) qui est prévue sur le boîtier (12) et au niveau de laquelle repose un élément d'étanchéité (72) et rend étanche ledit orifice de sortie (34, 35) ou ledit orifice d'entrée (17) de manière radiale par rapport au boîtier (12), et **en ce qu'**à partir de l'axe longitudinal (91) de l'orifice de sortie (34, 35) ou de l'orifice d'entrée (17) s'étend un rayon R2 jusqu'à une ligne d'étanchéité (95) formée entre le disque de commande (55) et le support de tiroir rotatif (57) et **en ce que** le rapport R1 : R2 se situe dans une plage comprise entre 0,25 et 4.
